# EUROPEAN PATENT SPECIFICATION

(11) **EP 3 637 518 B1**
(45) Date of publication and mention of the grant of the patent: **26.11.2025**
(21) Application number: 18802245.3
(22) Date of filing: 18.05.2018
(51) Int. Cl.: H01M 8/1213, B32B 9/00, C04B 41/90, H01M 4/86, H01M 4/88, H01M 8/12, H01M 8/1253, H01M 8/126, H01M 4/90, H01M 8/1231, H01M 8/1246

(54) **MULTILAYER STRUCTURE OF ELECTRODE AND MIXED ION/ELECTRON CONDUCTIVE ELECTROLYTE AND METHOD FOR PRODUCING SAME**
MEHRSCHICHTIGE STRUKTUR EINER ELEKTRODE UND GEMISCHTER IONEN-/ELEKTRONENLEITENDER ELEKTROLYT SOWIE HERSTELLUNGSVERFAHREN DAFÜR
STRUCTURE MULTICOUCHE D'ÉLECTRODE ET ÉLECTROLYTE CONDUCTEUR D'IONS/ÉLECTRONS MIXTE ET SON PROCÉDÉ DE PRODUCTION

(30) Priority: 18.05.2017 JP 2017098769
(43) Date of publication of application: 15.04.2020
(73) Proprietor: NATIONAL INSTITUTE OF ADVANCED INDUSTRIAL SCIENCE AND TECHNOLOGY, Chiyoda-ku Tokyo 100-8921 (JP)
(72) Inventor: SHIMADA, Hiroyuki, Nagoya-shi, Aichi 463-8560 (JP); YAMAGUCHI, Toshiaki, Nagoya-shi, Aichi 463-8560 (JP)
(74) Representative: Dehns
(86) International application number: PCT/JP2018/019369
(87) International publication number: WO 2018/212344

(56) References cited:
- JP-A- 2005 336 022
- JP-A- 2006 339 034
- JP-A- 2009 259 746
- JP-A- 2009 259 746
- JP-A- 2014 071 937
- JP-A- 2015 046 365
- JP-A- 2015 172 213
- JP-A- 2016 031 933
- JP-A- 2016 183 094
- JP-A- H11 162 483
- US-A1- 2011 195 342
- SEUNG-YOUNG PARK ET AL: "Preparation of highly porous NiO-gadolinium-doped ceria nano-composite powders by one-pot glycine nitrate process for anode-supported tubular solid oxide fuel cells", JOURNAL OF ASIAN CERAMIC SOCIETIES, vol. 2, no. 4, 1 December 2014 (2014-12-01), pages 339 - 346, XP055432515, ISSN: 2187-0764, DOI: 10.1016/j.jascer.2014.07.005
- SANGHOON JI ET AL: "Performance enhancement of thin-film ceramic electrolyte fuel cell using bi-layered yttrium-doped barium zirconate", THIN SOLID FILMS, vol. 539, 18 May 2013 (2013-05-18), AMSTERDAM, NL, pages 117 - 121, XP055765337, ISSN: 0040-6090, DOI: 10.1016/j.tsf.2013.05.063

## Description

### Technical Field

The present invention relates to a laminate structure of mixed ionic-electronic conductive electrolyte and electrode, and a method for manufacturing same.

### Background Art

Research and development on the implementation of solid oxide cells for electrochemical reactions as devices enabling high-efficiency energy transformation. Representative examples of devices that use solid oxide cells include solid oxide fuel cells and solid oxide electrolyte cells, and the like. A solid oxide cell is configured by sandwiching a dense-body electrolyte, of which the principal material is an oxide, between two porous-body electrodes which are an air electrode and a fuel electrode. An electrolyte material that conducts both ions and electrons is called a mixed ionic-electronic conductive electrolyte.

Ions that act as charge carriers are mainly oxide ions and protons. Electrolyte materials that conduct oxide ions are called oxide ion-conductive electrolytes, and electrolyte materials that conduct protons are called proton-conductive electrolytes. Representative examples of oxide ion-conductive electrolytes include ceria-based materials and the like, and representative examples of proton-conductive electrolytes include perovskite-type oxide materials and the like.

Among mixed ionic-electronic conductive electrolytes, there are a large number of materials that exhibit high electric conductivity. Due to their wide usage temperature range of 300 to 800°C, these materials have potential for realizing high-output solid oxide cells that correspond to a variety of applications. However, when such materials are used as solid oxide cell electrolytes, because electrons or holes are conducted at the same time as ions, there is a risk of electron leakage. Hence, there is a problem in that the fuel cell power generation efficiency or electrolytic gas separation efficiency drops in devices which use solid oxide cells in which such materials are employed as the electrolyte.

If it is possible to improve the ratio of ions acting as charge carriers propagating through the electrolyte, that is, the ionic transference number by selectively increasing the conductivity of ions relative to electron conductivity, the fuel cell power generation efficiency or electrolytic gas separation efficiency of a device using a mixed ionic-electronic conductive electrolyte can be improved. In addition, in order to use a mixed ionic-electronic conductive electrolyte as a solid oxide cell electrolyte at a practical level, a thin film is required from the standpoint of lowering electrical resistance and cutting costs. There is therefore a need to realize a mixed ionic-electronic conductive electrolyte that has not only high-ion conductivity and a high ionic transference number but also a thin film.

Thus far, improving the ionic transference number of a mixed ionic-electronic conductive electrolyte by controlling the composition of the oxide material constituting the electrolyte has been investigated. A case where the ionic transference number has actually been improved successfully has been reported (Non Patent Literature 1). However, in Non Patent Literature 1, the ionic transference number is limited to about 0.9 in a low temperature range of 500°C or less. For practical use, higher ionic transference numbers must be realized in temperature ranges from low temperature ranges on the order of 300°C to high temperature ranges on the order of 700°C. Moreover, as an example where suppressing electron leakage and obtaining a high ionic transference number have been successfully achieved, lamination of a Pd film and a mixed ionic-electronic conductive electrolyte has been reported (Non Patent Literature 2). However, the laminate body disclosed in Non Patent Literature 2 requires the use of Pd, which is a costly noble metal, and cost cutting is difficult.
JP 2009 259746A describes a solid oxide fuel cell including an electrolyte layer made of an oxide ion conductor containing cerium oxide, and a fuel electrode and an air electrode sandwiching the electrolyte layer. Seung-Young Park et al, Journal of Asian Ceramic Societies, Vol.2, No.4, pages 339-346 describes the preparation of highly porous NiO-gadolinium-doped ceria nano-composite powders by one-pot glycine nitrate process for anode-supported tubular solid oxide fuel cells. JP-2014 071937 A describes a direct flame type fuel cell single cell and its manufacturing method. JP-2015-046365 A describes a cell, cell stack device, module and module storage device. JP-2006-339034 A describes a solid oxide fuel cell and its manufacturing method.

### Citation List

### Non Patent Literature

Non Patent Literature 1: T. Yamaguchi, H. Shimada, U. Honda, H. Kishimoto, T. Ishiyama, K. Hamamoto, H. Sumi, T. Suzuki, Y. Fujishiro, Solid State Ionics, 288, 347-350 (2016)
Non Patent Literature 2: N. Ito, M. Iijima, K. Kimura, S. Iguchi, Journal of Power Sources, 152 (2005) 200-203

### Summary of Invention

### Technical Problem

The present invention was conceived in view of the foregoing issues, and an object of the present invention is to provide a thin-film laminate structure of mixed ionic-electronic conductive electrolyte and electrode which, when used as a solid oxide cell electrolyte, enables the ionic transference number to be increased even without using a costly noble metal, and a method for manufacturing same.

### Solution to Problem

The present inventors discovered, as a result of repeated intensive research to solve the problem confronted by the foregoing prior art, that an air electrode or fuel electrode is required, not only to improve the ionic transference number, which constitutes a material property of a mixed ionic-electronic conductive electrolyte, but also to prioritize the conduction of ions. Then, by laminating this electrode and the mixed ionic-electronic conductive electrolyte, the present inventors succeeded in improving the ionic transference number of the laminate structure, which in turn led to the development of the present invention.

In one aspect, the present invention provides a laminate structure of mixed ionic-electronic conductive electrolyte and electrode, comprising:
a dense electrolyte layer that has a film thickness of 1 to 15 µm and a relative density of 95 to 100 vol%, obtainable when measured by using a scanning electron microscope to observe the cross-sections of the solid oxide cells and subjecting the contrast of the scanning electron microscope images to image processing, and which contains a first oxide having mixed ionic-electronic conductivity;
a porous electrolyte layer which is laminated on the dense electrolyte layer, has a film thickness of 1 to 10 µm and a relative density of 30 to 90 vol%, obtainable when measured by using a scanning electron microscope to observe the cross-sections of the solid oxide cells and subjecting the contrast of the scanning electron microscope images to image processing, and which contains a second oxide having mixed ionic-electronic conductivity; and
a porous electrode which is laminated on the porous electrolyte layer,
wherein the first oxide and the second oxide are oxides represented by A_{X}B_{Y}O_{3+Z} (A= Ba and B= at least one element among Zr, Ce, Y, and Yb, where 0.8 ≤ X ≤ 1.2, 0.8 ≤ Y ≤ 1.2, and -1 ≤ Z ≤ 1).
The porous electrode may contain an oxide represented by A_{X}B_{Y}O_{3+Z} (A= at least one element among Sr, Ba, and La, and B= at least one element among Zr, Ce, Sc, Y, In, and Yb, where 0.8 ≤ X ≤ 1.2, 0.8 ≤ Y ≤ 1.2, and -1 ≤ Z ≤ 1), and/or an oxide represented by CeₓM_{y}O_{2-z} (M= at least one element among Sc, Y, Zr, In, La, Pr, Sm, Gd, and Yb, where 0.6 ≤ x ≤ 1.0, 0 ≤ y ≤ 0.4, and 0 ≤ z ≤ 0.5), and
wherein the content percentage of the oxides in the porous electrode is 30 to 70 mass%.
In another aspect, the invention provides a solid oxide cell having a laminate structure of mixed ionic-electronic conductive electrolyte and electrode according to the invention.

In another aspect, the invention provides a method for manufacturing the laminate structure of mixed ionic-electronic conductive electrolyte and electrode of the present invention which comprises a step of forming the dense electrolyte layer by coating a first slurry on a support body and then firing at a first temperature; a step of forming the porous electrolyte layer by coating a second slurry on the dense electrolyte layer and then firing at a second temperature; and a step of forming the porous electrode by coating a third slurry on the porous electrolyte layer and then firing at a third temperature.

In said method, the temperature may be such that the first temperature ≥ the second temperature ≥ the third temperature.

In a yet further aspect, the invention provides a method for manufacturing the solid oxide cell of the present invention comprising a step of forming the dense electrolyte layer by coating a first slurry on a first electrode and then firing at a first temperature; a step of forming the porous electrolyte layer by coating a second slurry on the dense electrolyte layer and then firing at a second temperature; and a step of forming the porous electrode which is a second electrode by coating a third slurry on the porous electrolyte layer and then firing at a third temperature.
In said method, the temperatures may be such that the first temperature ≥ the second temperature ≥ the third temperature.

### Advantageous Effects of Invention

By using the laminate structure of mixed ionic-electronic conductive electrolyte and electrode of the present invention, a solid oxide cell having a high ionic transference number is obtained. By means of this solid oxide cell, a fuel cell power generation efficiency or electrolytic gas separation efficiency that exceeds that of the prior art can be realized.

### Brief Description of Drawings

Fig. 1 is a cross-sectional schematic diagram of a laminate structure of mixed ionic-electronic conductive electrolyte and electrode according to an embodiment.
Fig. 2 is a scanning electron microscope (SEM) image of a cross section of a laminate structure part of a solid oxide cell according to an Example 1.
Fig. 3 is a graph illustrating power generation characteristics of an Example 1, Example 2, Comparative example 1, and Comparative example 3.

### Description of Embodiments

A laminate structure of mixed ionic-electronic conductive electrolyte and electrode (which sometimes appears simply as "laminate structure" hereinbelow) of the present invention, a method for manufacturing the laminate structure, a solid oxide cell, and a method for manufacturing the solid oxide cell will be described hereinbelow, on the basis of an embodiment and embodiment examples. Note that repetitive descriptions are sometimes omitted when a constituent member of a solid oxide cell is the same as a constituent member of the laminate structure.

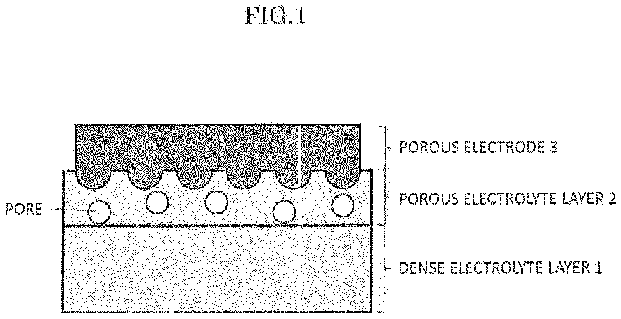

Fig. 1 schematically illustrates a cross section of a laminate structure according to an embodiment of the present invention. The laminate structure according to the embodiment includes a dense electrolyte layer 1, a porous electrolyte layer 2, and a porous electrode 3. The dense electrolyte layer 1 contains a first oxide having mixed ionic-electronic conductivity. Furthermore, the relative density of the dense electrolyte layer 1 is 95 to 100 vol%. Hence, when the laminate structure according to the embodiment is used in a solid oxide cell, the dense electrolyte layer 1 functions as a gas separator that prevents gas cross leakage.

The relative density of the dense electrolyte layer 1 is more preferably 97 to 100 vol% and particularly preferably 98 to 100 vol%. This is because such relative densities enable a further improvement in the gas separator function. Furthermore, the film thickness of the dense electrolyte layer 1 is 1 to 15 µm. Hence, the electrical resistance of the dense electrolyte layer 1, that is, the electrical resistance of the laminated parts of the dense electrolyte layer 1 and porous electrolyte layer 2 are kept low. The film thickness of the dense electrolyte layer 1 is more preferably 1 to 12 µm and particularly preferably 1 to 10 µm. This is because such film thicknesses enable a further reduction in the electrical resistance of the laminated parts of the dense electrolyte layer 1 and porous electrolyte layer 2.

The porous electrolyte layer 2 is laminated on the dense electrolyte layer 1 and has a porous structure which contains a second oxide having mixed ionic-electronic conductivity and which has a film thickness of 1 to 10 µm and a relative density of 30 to 90 vol%. By affording the porous electrolyte layer 2 a film thickness of 1 to 10 µm, the electrical resistance of the porous electrolyte layer 2, that is, the electrical resistance of the laminated parts of the dense electrolyte layer 1 and the porous electrolyte layer 2 is kept low. The film thickness of the porous electrolyte layer 2 is more preferably 1 to 6 µm and particularly preferably 1 to 4 µm. This is because such film thicknesses enable a further reduction in the electrical resistance of the laminated parts of the dense electrolyte layer 1 and porous electrolyte layer 2. In addition, because the pores of the porous electrolyte layer 2 contain a gas, the oxygen potential of the porous electrolyte layer 2 changes and the ionic transference number of the porous electrolyte layer 2 improves.

The porous electrode 3 is laminated on the porous electrolyte layer 2. Hence, a portion of the porous electrode 3 impregnates the porous electrolyte layer 2, the contact area between the porous electrolyte layer 2 and porous electrode 3 increases, and the adhesion strength can be improved. Hence, at the interface between the porous electrolyte layer 2 and porous electrode 3, the function for transforming charge carriers from electrons or holes to ions improves, thereby increasing the ionic transference number of the laminated parts of the dense electrolyte layer 1 and porous electrolyte layer 2.

Furthermore, the relative density of the porous electrolyte layer 2 is more preferably 40 to 80 vol% and particularly preferably 50 to 70 vol%. This is because such relative densities enable further increases in the contact area between and adhesion strength of the porous electrolyte layer 2 and porous electrode 3. Note that the relative density of the porous electrolyte layer 2 can be controlled by changing the additive amount or firing temperature of binder, plasticizer, or dispersant, or by adding and mixing carbon, cellulose, or a polymer pore-forming agent, at the time the porous electrolyte layer 2 is formed.

In the laminate structure of the invention the first oxide and second oxide may be oxides represented by a perovskite-type structure: A_{X}B_{Y}O_{3+Z} (A= Ba, and B= at least one element among Zr, Ce, Y, and Yb, where 0.8 ≤ X ≤ 1.2, 0.8 ≤ Y ≤ 1.2, and -1 ≤ Z ≤ 1). The porous electrode may contain said oxide and/or an oxide represented by ceria, which may be cation-doped: CeₓM_{y}O_{2-z} (M= at least one element among Sc, Y, Zr, In, La, Pr, Sm, Gd, and Yb, where 0.6 ≤ x ≤ 1.0, 0 ≤ y ≤ 0.4, and 0 ≤ z ≤ 0.5).

The porous electrode 3 may contain the foregoing oxide represented by the perovskite-type structure and/or the foregoing oxide which is ceria that may be cation-doped, and the content percentage of these oxides in the porous electrode 3 may be 30 to 70 mass%. Because the porous electrode 3 contains 30 to 70 mass% of these oxides, the electrochemical reaction active site of the porous electrode 3 can be increased rapidly and the electrode reaction resistance of the porous electrode 3 can be reduced. The content percentage of these oxides in the porous electrode 3 is more preferably 35 to 65 mass% and particularly preferably 40 to 60 mass%. This is because such content percentages enable a further reduction in the electrode reaction resistance of the porous electrode 3.

The porous electrode 3 may be a mixture of an oxide having mixed ionic-electronic conductivity and an oxide represented by a perovskite-type structure: EₑF_{f}O_{3+g} (E= at least one element among Ca, Sr, Ba, La, Pr, Sm, and Gd, and F= at least one element among Cr, Mn, Fe, Co, Ni, and Cu, where 0.8 ≤ e ≤ 1.2, 0.8 ≤ f ≤ 1.2, and -1 ≤ g ≤ 1), or a mixture of an oxide having mixed ionic-electronic conductivity and MeO_{α} (Me= at least one element among Ti, Mn, Fe, Co, Ni, and Cu, where α is at least 0.8 and no more than 2.2, for example).

The method for manufacturing a laminate structure according to the embodiment includes a step of forming the dense electrolyte layer 1 by coating a first slurry on a support body which is dissimilar to the mixed ionic-electronic conductive electrolyte, for example, and then firing at a first temperature; a step of forming the porous electrolyte layer 2 by coating a second slurry on the dense electrolyte layer 1 and then firing at a second temperature; and a step of forming the porous electrode 3 by coating a third slurry on the porous electrolyte layer 2 and then firing at a third temperature.

The support body used in the step of forming the dense electrolyte layer 1 is preferably a porous body. This is because a porous body enables the mechanical strength of the laminate structure to be maintained. The porosity of the porous support body is 10 to 60 vol%, for example. As the method for manufacturing the porous support body, uniaxial pressing, injection molding, extrusion molding, or slip casting, or the like, may be adopted, but the method is not limited to such methods. A planar shape or tubular shape, or the like, may be adopted for the shape of the porous support body, but the shape is not limited to such shapes.

The porosity of the support body can be controlled to a certain extent according to the firing conditions or the molded body density of the support body. When the porosity of the support body is inadequate, the shortage can be supplemented by using a carbon or hydrocarbon pore-forming agent. From the standpoint of achieving both strength and gas diffusion properties for the support body, the support body porosity after firing is desirably 10 to 60 vol%. By coating a first slurry, which is a mixed ionic-electronic conductive electrolyte material, on the support body and then firing at a first temperature, a thin film-like dense electrolyte layer 1 of the mixed ionic-electronic conductive electrolyte is obtained.

Possible methods of coating the first slurry include screen printing, spray coating, transfer methods, dip coating, and the like. Irrespective of the coating method used, a high molding density coating film is obtained by optimizing the particle dispersibility of the mixed ionic-electronic conductive electrolyte material within the first slurry. The coating film undergoes sintering by being fired at a first temperature, where the film thickness of the dense electrolyte layer 1 obtained after firing is desirably 1 to 15 µm.

When a mixed ionic-electronic conductive electrolyte is used as a solid oxide cell electrolyte, the dense electrolyte layer 1 is preferably made as thin as possible in order to reduce the electrical resistance of the mixed ionic-electronic conductive electrolyte. On the other hand, extreme thinning provokes gas leakage due to defects in the dense electrolyte layer 1. Hence, the dense electrolyte layer 1 suitably has a film thickness of 1 µm or more in order to prevent defects, and a film thickness of 15 µm or less, which enables the electrical resistance of the laminated parts of the dense electrolyte layer 1 and porous electrolyte layer 2 to be no more than a quarter of the total electrical resistance of the solid oxide cell.

The coating film firing temperature, that is, the first temperature is preferably 1250 to 1500°C, more preferably 1300 to 1450°C, and particularly preferably 1350 to 1400°C. This is because sintering of the coating film progresses adequately at a firing temperature of 1250°C or more, and a dense electrolyte is obtained. This is also because element diffusion and volatilization of the elements constituting the dense electrolyte layer 1 is suppressed at a firing temperature of 1500°C or less. The coating film firing time period is preferably one to eight hours, more preferably two to six hours, and particularly preferably three to four hours.

In the step of forming the porous electrolyte layer 2, by coating a second slurry, which is a mixed ionic-electronic conductive electrolyte material, on the dense electrolyte layer 1 and then firing at a second temperature equal to or lower than the first temperature, for example, a thin film-like porous electrolyte layer 2 of the mixed ionic-electronic conductive electrolyte is obtained. The laminated parts of the dense electrolyte layer 1 and porous electrolyte layer 2 are thus obtained. The second temperature is lower than the co-sintering temperature of the dense electrolyte layer 1 and porous electrolyte layer 2, and is preferably 1000 to 1400°C, more preferably 1100 to 1350°C, and particularly preferably 1150 to 1300°C. Possible methods of coating the second slurry include the same methods as the methods for coating the first slurry. Irrespective of the coating method used, a coating film of a uniform porous structure is obtained by optimizing the particle dispersibility of the mixed ionic-electronic conductive electrolyte material within the second slurry. The film thickness of the porous electrolyte layer 2 obtained after firing of the coating film is desirably 1 to 10 µm.

In the step of forming the porous electrode 3, the porous electrode 3, which is to act as an air electrode in the solid oxide cell, for example, is formed on the porous electrolyte layer 2. The porous electrode 3 desirably contains an oxide represented by a perovskite-type structure: CₐD_{b}O_{3+c} (C= at least one element among Ca, Sr, Ba, La, Pr, Sm, and Gd, and D= at least one element among Cr, Mn, Fe, Co, Ni, and Cu, where 0.8 ≤ a ≤ 1.2, 0.8 ≤ b ≤ 1.2, and -1 ≤ c ≤ 1).

To add the mixed ionic-electronic conductivity to the porous electrode 3 or so that the thermal expansion coefficient of the porous electrode is close to that of the porous electrolyte layer 2, the mixed ionic-electronic conductive electrolyte is sometimes used mixed with the oxide represented by CₐD_{b}O_{3+c}. The mass ratio of the oxide represented by CₐD_{b}O_{3+c} to the mixed ionic-electronic conductive electrolyte is, as a rough guide, in the preferred range of 30:70 to 70:30 in this case. A third temperature, which is the temperature at which the porous electrode 3 is fired, is equal to or lower than the second temperature and preferably 700 to 1200°C, more preferably 800 to 1100°C, and particularly preferably 900 to 1050°C.

The solid oxide cell according to the embodiment of the present invention includes a first electrode which is a fuel electrode, and the laminate structure of the present invention. The method for manufacturing a solid oxide cell according to the embodiment includes a step of forming the dense electrolyte layer by coating a first slurry on a first electrode and then firing at a first temperature; a step of forming the porous electrolyte layer by coating a second slurry on the dense electrolyte layer and then firing at a second temperature; and a step of forming the porous electrode which is a second electrode by coating a third slurry on the porous electrolyte layer and then firing at a third temperature.

Note that a solid oxide cell may be manufactured by using a support body which is dissimilar to the mixed ionic-electronic conductive electrolyte, forming a first electrode on the support body, sequentially forming the dense electrolyte layer and porous electrolyte layer on the first electrode, and forming a second electrode, which is a porous electrode, on the porous electrolyte layer. Furthermore, the air electrode may be either the first electrode or the second electrode, and the fuel electrode may be the other electrode which is not the air electrode. The porous electrode 3 is described as the air electrode in the foregoing laminate structure according to the embodiment.

The fuel electrode used in the step of forming the dense electrolyte layer is preferably a porous body. This is because a porous body enables the mechanical strength of the solid oxide cell to be maintained. The porosity of the fuel electrode, which is a porous body, is 10 to 60 vol%, for example. Possible materials for the fuel electrode include oxides such as alumina or zirconia, and heat-resistant metals. Note that the manufacturing method, shape and porosity of the fuel electrode are similar to the manufacturing method, shape and porosity of the porous electrode 3 of the laminate structure. A mixture of the mixed ionic-electronic conductive electrolyte and an oxide represented by MeO_{α} (Me= at least one element among Ti, Mn, Fe, Co, Ni, and Cu, where 0.8 ≤ α ≤ 2.2) may also be used as the fuel electrode.

The mixing ratio by mass of the mixed ionic-electronic conductive electrolyte to the oxide represented by MeO_{α} is, as a rough guide, in the preferred range of 30:70 to 70:30 for the mixed ionic-electronic conductive electrolyte and the oxide represented by MeO_{α}. The mixing ratio by mass is more preferably 35:65 to 65:35 for the mixed ionic-electronic conductive electrolyte to the oxide represented by MeO_{α}, and particularly preferably 40:60 to 60:40 for the mixed ionic-electronic conductive electrolyte to the oxide represented by MeO_{α}.

By coating a first slurry, which is a mixed ionic-electronic conductive electrolyte material, on the fuel electrode and co-sintering the fuel electrode and the coating at the first temperature, a thin film-like dense electrolyte layer of the mixed ionic-electronic conductive electrolyte is obtained. That is, a laminate body that has a dense electrolyte layer of the mixed ionic-electronic conductive electrolyte and a first electrode, which is a fuel electrode formed on one side of the dense electrolyte layer, is obtained. Note that, by co-sintering the fuel electrode and the coating, the mixed ionic-electronic conductive electrolyte can be compressed together with the fuel electrode, and a dense electrolyte layer of a high relative density is obtained.

Note that the method for coating the first slurry and the film thickness of the dense electrolyte layer are similar to the method for coating the first slurry, which is the method for manufacturing a laminate structure, and to the film thickness of the dense electrolyte layer in the laminate structure. In addition, the preferred range for the first temperature, which is the co-sintering temperature for the fuel electrode and dense electrolyte layer, and the reason for this range are similar to the preferred range for the firing temperature of the coating film, which is the material for the dense electrolyte layer in the laminate structure, and the reason for this range. Furthermore, the preferred range for the co-sintering time period and the reason for this time period are similar to the preferred range for the firing time period of the coating film, which is the material of the dense electrolyte layer in the laminate structure, and the reason for this time period.

In the step of forming the porous electrolyte layer, by coating a second slurry, which is a mixed ionic-electronic conductive electrolyte material, on the dense electrolyte layer and then firing at a second temperature, which is a temperature equal to or lower than the co-sintering temperature, for example, a thin film-like porous electrolyte layer of the mixed ionic-electronic conductive electrolyte is obtained. A laminate body including a porous electrolyte layer, a dense electrolyte layer, and a fuel electrode formed on the side of the dense electrolyte layer is thus obtained. The second temperature is lower than the co-sintering temperature of the dense electrolyte layer and porous electrolyte layer, and is preferably 1000 to 1400°C, more preferably 1100 to 1350°C, and particularly preferably 1150 to 1300°C. Note that the method for coating the second slurry and the film thickness of the porous electrolyte layer are similar to the method for coating the second slurry in the method for manufacturing a laminate structure, and to the film thickness of the porous electrolyte layer in the laminate structure.

In the step of forming the porous electrode, the porous electrode, which is to be an air electrode in the porous electrolyte layer, is formed. The oxide contained in the porous electrode, the mixture of this oxide and mixed ionic-electronic conductive electrolyte, and the third temperature, which is the firing temperature of the porous electrode, are the same as when manufacturing the laminate structure. Note that a solid oxide cell may also be regarded as a device in which a mixed ionic-electronic conductive electrolyte, which is configured from a dense electrolyte layer and a porous electrolyte layer, and a second electrode are sequentially formed on a first electrode constituting a support body. The parts of the mixed ionic-electronic conductive electrolyte and second electrode then constitute a laminate structure.

### Examples

The present invention will be described in more specific terms next with reference to embodiment examples. However, the embodiment examples are merely illustrative and are not intended to limit the present invention.

### <Examples>

Solid oxide cells according to various embodiment examples which include two layers of dissimilar-porosity mixed ionic-electronic conductive electrolyte, a porous air electrode, and a porous fuel electrode were manufactured according to the procedure hereinbelow.

### <Example 1>

A mixed powder was obtained by mixing NiO with BₐZr _{0.7}Ce_{0.1}Y_{0.1}Yb_{0.1}O_{3-α} (which sometimes appears as "BZCYYb" hereinbelow) and carbon in a 6:4:2 mass ratio. Uniaxial pressforming of the mixed powder was carried out with a diameter of 30 mm and at a pressure of 20 MPa. A 1.4 mm-thick calcined body constituting a fuel electrode support body was obtained by firing the molded body thus obtained at 900°C for one hour.

A dispersed slurry obtained by adding a binder, plasticizer, dispersant, and BZCYYb to a mixed solution of ethanol and toluene was coated on the calcined body by means of spin coating to afford a film thickness of 10 µm. Thereafter, an integrally molded body of the mixed ionic-electronic conductive electrolyte layer and the fuel electrode support body was obtained via co-sintering at 1350°C for three hours. The mixed ionic-electronic conductive electrolyte layer thus obtained was densified using high-temperature co-sintering. The mixed ionic-electronic conductive electrolyte layer serves as a first layer of mixed ionic-electronic conductive electrolyte.

A dispersed slurry obtained by adding an addition amount-adjusted binder, plasticizer, dispersant, and BZCYYb to a mixed solution of ethanol and toluene was coated on the first layer of the mixed ionic-electronic conductive electrolyte by means of spin coating to afford a film thickness of 3 µm. Thereafter, a second layer of porous mixed ionic-electronic conductive electrolyte which has a higher porosity than the first layer of mixed ionic-electronic conductive electrolyte was formed by firing at 1300°C for one hour.

A mixed powder was obtained by mixing an La_{0.6}Sr_{0.4}Co _{0.2}Fe_{0.8}O_{3-δ} (which sometimes appears as "LSCF" hereinbelow) powder and a BZCYYb powder in a mass ratio of 7:3. An air electrode slurry S1 was obtained using a kneader for 1 minute 30 seconds at an ambient temperature to knead together a mixture of this mixed powder, ethyl cellulose, plasticizer, dispersant, and α-terpineol. The air electrode slurry S1 was coated on the second layer of mixed ionic-electronic conductive electrolyte by means of screen printing to afford a film thickness of 20 µm. Thereafter, the air electrode was obtained by firing at 1050°C for one hour. The solid oxide cell of Example 1 was thus manufactured.

### <Example 2>

A calcined body, first layer of mixed ionic-electronic conductive electrolyte, and second layer of mixed ionic-electronic conductive electrolyte were manufactured by means of the same method as Example 1. A mixed powder was obtained by mixing an La_{0.6}Ba_{0.4}CoO_{3-β} (which sometimes appears as "LBC" hereinbelow) powder and BZCYYb powder in a mass ratio of 5:5. An air electrode slurry S2 was obtained using a kneader for 1 minute 30 seconds at an ambient temperature to knead together a mixture of this mixed powder, ethyl cellulose, plasticizer, dispersant, and α-terpineol. The air electrode slurry S2 was coated on the second layer of mixed ionic-electronic conductive electrolyte layer by means of screen printing to afford a film thickness of approximately 20 µm. Thereafter, the air electrode was obtained by firing at 1050°C for one hour. The solid oxide cell of Example 2 was thus manufactured.

### <Example 3>

A calcined body and first layer of mixed ionic-electronic conductive electrolyte were obtained by means of the same method as Example 1. A dispersed slurry obtained by adding an addition amount-adjusted binder, plasticizer, dispersant, BZCYYb, and 20% by mass, relative to the BZCYYb, of pore-forming agent to a mixed solution of ethanol and toluene was coated on the first layer of the mixed ionic-electronic conductive electrolyte by means of spin coating to afford a film thickness of approximately 3 µm. Thereafter, a second layer of porous mixed ionic-electronic conductive electrolyte which has a higher porosity than the first layer of mixed ionic-electronic conductive electrolyte was formed by firing at 1300°C for one hour. An air electrode was then obtained on the second layer of mixed ionic-electronic conductive electrolyte by means of the same method as Example 1. The solid oxide cell of Example 3 was thus manufactured.

### <Example 4>

A calcined body and first layer of mixed ionic-electronic conductive electrolyte were obtained by means of the same method as Example 1. A dispersed slurry obtained by adding an addition amount-adjusted binder, plasticizer, dispersant, and BZCYYb to a mixed solution of ethanol and toluene was coated on the first layer of the mixed ionic-electronic conductive electrolyte by means of spin coating to afford a film thickness of approximately 3 µm. Thereafter, a second layer of porous mixed ionic-electronic conductive electrolyte which has a higher porosity than the first layer of mixed ionic-electronic conductive electrolyte was formed by firing at 1200°C for one hour. An air electrode was then obtained on the second layer of mixed ionic-electronic conductive electrolyte by means of the same method as Example 1. The solid oxide cell of Example 4 was thus manufactured from the solid oxide cell manufactured as detailed hereinabove.

### <Comparative examples>

Solid oxide cells of various comparative examples were manufactured according to the procedure hereinbelow. A solid oxide cell without the second layer of porous mixed ionic-electronic conductive electrolyte was manufactured in Comparative examples 1 to 3. A solid oxide cell in which the relative density of the second layer of porous mixed ionic-electronic conductive electrolyte is less than 30 vol% was manufactured in Comparative example 4.

### <Comparative example 1>

A calcined body and first layer of mixed ionic-electronic conductive electrolyte were obtained by means of the same method as Example 1. An air electrode was then obtained on the first layer of mixed ionic-electronic conductive electrolyte by means of the same method as Example 1. The solid oxide cell of Comparative example 1 was thus manufactured.

### <Comparative example 2>

A calcined body and first layer of mixed ionic-electronic conductive electrolyte were obtained by means of the same method as Example 1. An air electrode was then obtained on the first layer of mixed ionic-electronic conductive electrolyte by means of the same method as Example 2. The solid oxide cell of Comparative example 2 was thus manufactured.

### <Comparative example 3>

A calcined body of a fuel electrode support body was obtained by means of the same method as Example 1. A dispersed slurry obtained by adding a binder, plasticizer, dispersant, and BZCYYb to a mixed solution of ethanol and toluene was coated on the calcined body by means of spin coating to afford a film thickness of approximately 20 µm. Thereafter, an integrally molded body of the first layer of mixed ionic-electronic conductive electrolyte and the fuel electrode support body was obtained via co-sintering at 1350°C for three hours. The first layer of mixed ionic-electronic conductive electrolyte was densified by means of high temperature co-sintering. An air electrode was then obtained on the first layer of mixed ionic-electronic conductive electrolyte by means of the same method as Example 1. The solid oxide cell of Comparative example 3 was thus manufactured.

### <Comparative example 4>

A calcined body and first layer of mixed ionic-electronic conductive electrolyte were obtained by means of the same method as Example 1. A dispersed slurry obtained by adding an addition amount-adjusted binder, plasticizer, dispersant, BZCYYb, and 40% by mass, relative to the BZCYYb, of pore-forming agent to a mixed solution of ethanol and toluene was coated on the first layer of the mixed ionic-electronic conductive electrolyte by means of spin coating to afford a film thickness of approximately 3 µm. Thereafter, a second layer of porous mixed ionic-electronic conductive electrolyte which has a lower relative density than the first layer of mixed ionic-electronic conductive electrolyte was formed by firing at 1300°C for one hour. An air electrode was then obtained on the second layer of mixed ionic-electronic conductive electrolyte by means of the same method as Example 1. The solid oxide cell of Comparative example 4 was thus manufactured.

### <Relative density measurement>

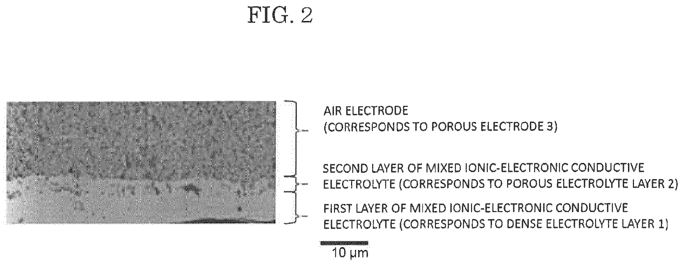

By using a scanning electron microscope (SEM) (the JSM-5600 manufactured by JEOL Ltd.) to observe the cross sections of the solid oxide cells of Examples 1 to 4 and Comparative examples 1 to 4 and subjecting the contrast of the SEM images to image processing, the relative densities of the fuel electrode support body, air electrode, and mixed ionic-electronic conductive electrolyte were obtained. Note that the relationship between the relative density (vol%) and porosity (vol%) is relative density = 100-porosity. By way of example, an SEM image of the laminate structure part of the solid oxide cell of Example 1 is illustrated in Fig. 2.

In Examples 1 to 4 and Comparative examples 1 to 4, the porosity of the fuel electrode support body is 15 to 17 vol%, the porosity of the air electrode is 25 to 32 vol%, and there was no significant difference in porosity between the samples for the fuel electrode support body and air electrode. The film thicknesses and relative densities of the first layer of dense mixed ionic-electronic conductive electrolyte and the second layer of porous mixed ionic-electronic conductive electrolyte in the solid oxide cells of the embodiment examples and comparative examples are illustrated in Table 1.

**[Table 1]**

| Samples | First layer (dense layer) of mixed ionic-electronic conductive electrolyte | | Second layer (porous layer) of mixed ionic-electronic conductive electrolyte | | Air electrode material |
|---|---|---|---|---|---|
| | Film thickness (µm) | Relative density (vol%) | Film thickness (µm) | Relative density (vol%) | |
| Example 1 | 11 | 97 | 3 | 81 | S1 |
| Example 2 | 10 | 96 | 3 | 80 | S2 |
| Example 3 | 11 | 96 | 3 | 40 | S1 |
| Example 4 | 11 | 97 | 3 | 72 | S1 |
| Comparative example 1 | 12 | 97 | - | - | S1 |
| Comparative example 2 | 11 | 96 | - | - | S2 |
| Comparative example 3 | 23 | 97 | - | - | S1 |
| Comparative example 4 | 11 | 98 | 3 | 28 | S1 |

S1 in Table 1 is LSCF-BZCYYb, and S2 is LBC-BZCYYb. In all of the samples of the embodiment examples and comparative examples, the relative density of the first layer of mixed ionic-electronic conductive electrolyte was 96 vol% or more. On that basis, it is believed that gas cross leakage can be adequately prevented. Furthermore, the relative density of the second layer of mixed ionic-electronic conductive electrolyte was 40 to 82 vol%, and the second layer of mixed ionic-electronic conductive electrolyte was confirmed as porous.

### <Electromotive force measurement>

The electromotive force generated between the two electrodes when dissimilar gases are introduced to the air electrode and fuel electrode was used as an evaluation index for the ionic transference number of a solid oxide cell that has a laminate structure of mixed ionic-electronic conductive electrolyte and electrode. A higher electromotive force signifies a higher ionic transference number. In Examples 1 to 4 and Comparative examples 1 to 4, humidified hydrogen was supplied to the fuel electrode at 25°C and humidified air was supplied to the air electrode at 25°C, and the electromotive force at 700°C was measured. The results are shown below.

| | | | | | |
|---|---|---|---|---|---|
| Example 1: | 1.033 | (V) | Comparative example 1: | 0.972 | (V) |
| Example 2: | 1.063 | (V) | Comparative example 2: | 0.965 | (V) |
| Example 3: | 1.040 | (V) | Comparative example 3: | 1.022 | (V) |
| Example 4: | 1.051 | (V) | Comparative example 4: | 0.980 | (V) |

The solid oxide cells of Examples 1 to 4 exhibited a high electromotive force in comparison with the solid oxide cells of Comparative examples 1 to 4. As a representative example, when the electromotive forces of the solid oxide cells of Examples 1 and 2 are converted to ionic transference numbers, same are 0.92 and 0.95 respectively. From the results of measuring relative density, it is believed that gas cross leakage in the electrolyte does not occur in any of the solid oxide cells of the embodiment examples and comparative examples. Furthermore, when the exhaust gas flow rates on the air electrode side and fuel electrode side were confirmed using a gas flowmeter (the GF1010 manufactured by GL Sciences), both values were substantially identical to the supply gas flow rate. On that basis, it may be considered that there is no gas leakage in the measurement system.

The foregoing suggests that the difference in the electromotive force of the solid oxide cells is caused by electron leakage due to the mixed ionic-electronic conductivity of the electrolyte. Furthermore, because the film thickness of the first layer of mixed ionic-electronic conductive electrolyte in the solid oxide cell of Comparative example 3 is 23 µm and thicker than the first layer of mixed ionic-electronic conductive electrolyte in the other solid oxide cell, a high electromotive force is obtained. However, there is concern regarding an increase in the electrical resistance of the electrolyte caused by the electrolyte layer being thick. According to the foregoing results, it was confirmed that a high electromotive force can be implemented for the solid oxide cells of Examples 1 to 4 as a result of the second layer of mixed ionic-electronic conductive electrolyte effectively preventing electron leakage and of causing the porous air electrode formed on the second layer of mixed ionic-electronic conductive electrolyte to selectively conduct ions.

### <Power generation characteristics>

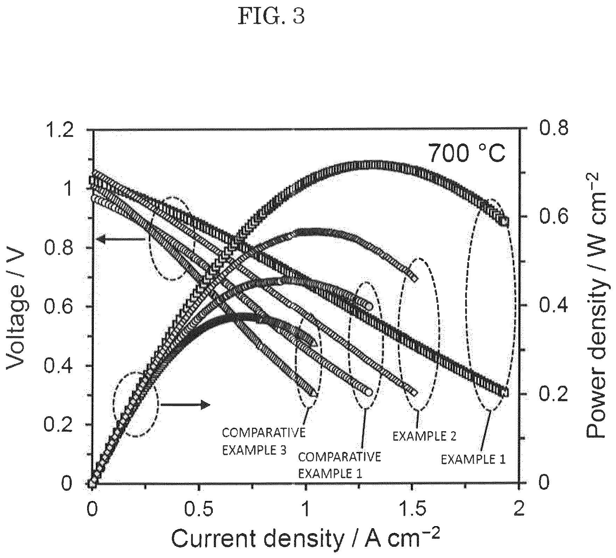

Humidified hydrogen was supplied to the fuel electrode of the solid oxide cells according to Examples 1 and 2 and Comparative examples 1 and 3 at 25°C, and humidified air was supplied to the air electrode of these solid oxide cells at 25°C, and the power generation characteristics (current-voltage characteristic and current-output characteristic) at 700°C were measured. The results are illustrated in Fig. 3. The solid oxide cells of Examples 1 and 2 exhibited a high power density in comparison with the solid oxide cell of Comparative example 1. It may be considered that the difference in power density is due to the difference in electrode reaction resistance because the film thicknesses of the first layer of mixed ionic-electronic conductive electrolyte in the solid oxide cells of Examples 1 and 2, and Comparative example 1 are substantially similar (see Table 1).

In the solid oxide cell of the present invention, because the air electrode slurry impregnates the porous structure of the second layer of mixed ionic-electronic conductive electrolyte, there is an enlargement of the electrolyte/electrode contact area between the second layer of mixed ionic-electronic conductive electrolyte and the air electrode, and an increase in the electrochemical reaction active site. Hence, it may be considered that the solid oxide cell of the present invention not only improves the electromotive force but also has the advantageous effect of reducing the electrode reaction resistance. The foregoing power generation results suggest this advantageous effect. Furthermore, as indicated by the foregoing results of measuring the electromotive force, the solid oxide cell according to Comparative example 3 exhibited a high electromotive force in the comparative example, but because the first layer of mixed ionic-electronic conductive electrolyte was thick, there was an increase in the electrical resistance of the electrolyte and the power density assumed a low value. It is clear from the foregoing that the solid oxide cell of the present invention also affords the advantageous effect of improving the power density in addition to raising the ionic transference number.

### Industrial Applicability

The solid oxide cell of the present invention simultaneously suppresses gas cross leakage and electron leakage, whereby a high electromotive force is obtained. Moreover, the solid oxide cell of the present invention makes it possible to realize a high power density by enabling a reduced electrode reaction resistance. The solid oxide cell of the present invention makes it possible to realize a power generation efficiency and hydrogen separation performance that exceed those of the prior art and is useful as a prospective electrochemical device.

## Claims

1. A laminate structure of mixed ionic-electronic conductive electrolyte and electrode, comprising:
a dense electrolyte layer that has a film thickness of 1 to 15 µm and a relative density of 95 to 100 vol%, obtainable when measured by using a scanning electron microscope to observe the cross-sections of the solid oxide cells and subjecting the contrast of the scanning electron microscope images to image processing, and which contains a first oxide having mixed ionic-electronic conductivity;
a porous electrolyte layer which is laminated on the dense electrolyte layer, has a film thickness of 1 to 10 µm and a relative density of 30 to 90 vol%, obtainable when measured by using a scanning electron microscope to observe the cross-sections of the solid oxide cells and subjecting the contrast of the scanning electron microscope images to image processing, and which contains a second oxide having mixed ionic-electronic conductivity; and
a porous electrode which is laminated on the porous electrolyte layer,
wherein the first oxide and the second oxide are oxides represented by A_{X}B_{Y}O_{3+Z} (A= Ba and B= at least one element among Zr, Ce, Y, and Yb, where 0.8 ≤ X ≤ 1.2, 0.8 ≤ Y ≤ 1.2, and -1 ≤ Z ≤ 1).

2. A laminate structure of mixed ionic-electronic conductive electrolyte and electrode as claimed in claim 1,
wherein the porous electrode contains an oxide represented by A_{X}B_{Y}O_{3+Z} (A= at least one element among Sr, Ba, and La, and B= at least one element among Zr, Ce, Sc, Y, In, and Yb, where 0.8 ≤ X ≤ 1.2, 0.8 ≤ Y ≤ 1.2, and -1 ≤ Z ≤ 1), and/or an oxide represented by CeₓM_{y}O_{2-z} (M= at least one element among Sc, Y, Zr, In, La, Pr, Sm, Gd, and Yb, where 0.6 ≤ x ≤ 1.0, 0 ≤ y ≤ 0.4, and 0 ≤ z ≤ 0.5), and
wherein the content percentage of the oxides in the porous electrode is 30 to 70 mass%.

3. A solid oxide cell having a laminate structure of mixed ionic-electronic conductive electrolyte and electrode as claimed in claim 1 or claim 2.

4. A method for manufacturing a laminate structure of mixed ionic-electronic conductive electrolyte and electrode as claimed in any of claims 1 to 3, comprising:
a step of forming the dense electrolyte layer by coating a first slurry on a support body and then firing at a first temperature;
a step of forming the porous electrolyte layer by coating a second slurry on the dense electrolyte layer and then firing at a second temperature; and
a step of forming the porous electrode by coating a third slurry on the porous electrolyte layer and then firing at a third temperature.

5. A method for manufacturing a laminate structure of mixed ionic-electronic conductive electrolyte and electrode as claimed in claim 4,
wherein the first temperature ≥ the second temperature ≥ the third temperature.

6. A method for manufacturing a solid oxide cell as claimed in claim 3, comprising:
a step of forming the dense electrolyte layer by coating a first slurry on a first electrode and then firing at a first temperature;
a step of forming the porous electrolyte layer by coating a second slurry on the dense electrolyte layer and then firing at a second temperature; and
a step of forming the porous electrode which is a second electrode by coating a third slurry on the porous electrolyte layer and then firing at a third temperature.

7. A method for manufacturing a solid oxide cell as claimed in claim 6, wherein the first temperature ≥ the second temperature ≥ the third temperature.

## Patentansprüche

1. Laminatstruktur aus einem gemischten ionisch-elektronisch leitfähigen Elektrolyt und einer Elektrode, umfassend:
eine dichte Elektrolytschicht, die eine Filmdicke von 1 bis 15 µm und eine relative Dichte von 95 bis 100 Vol.-% aufweist, erhältlich, wenn unter Verwendung eines Rasterelektronenmikroskops gemessen, um die Querschnitte der festen Oxidzellen zu beobachten und den Kontrast der Rasterelektronenmikroskopbilder einer Bildverarbeitung zu unterziehen, und die ein erstes Oxid enthält, das eine gemischte ionisch-elektrische Leitfähigkeit aufweist;
eine poröse Elektrolytschicht, die auf der dichten Elektrolytschicht laminiert ist, eine Filmdicke von 1 bis 10 µm und eine relative Dichte von 30 bis 90 Vol.-% aufweist, erhältlich, wenn unter Verwendung eines Rasterelektronenmikroskops gemessen, um die Querschnitte der festen Oxidzellen zu beobachten und den Kontrast der Rasterelektronenmikroskopbilder einer Bildverarbeitung zu unterziehen, und die ein zweites Oxid enthält, das eine gemischte ionisch-elektrische Leitfähigkeit aufweist; und
eine poröse Elektrode, die auf der porösen Elektrolytschicht laminiert ist,
wobei das erste Oxid und das zweite Oxid Oxide sind, die durch y A_{X}B_{Y}O_{3+Z} dargestellt werden (A= Ba und B= mindestens ein Element aus Zr, Ce, Y und Yb, wobei 0,8 s X ≤ 1,2, 0,8 ≤ Y ≤ 1,2 und -1 ≤ Z ≤ 1).

2. Laminatstruktur aus einem gemischten ionisch-elektronisch leitfähigen Elektrolyt und einer Elektrode nach Anspruch 1,
wobei die poröse Elektrode ein Oxid enthält, das durch AₓB_{y}O_{3+z} dargestellt wird (A= mindestens ein Element aus Sr, Ba und La, und B= mindestens ein Element aus Zr, Ce, Sc, Y, In und Yb, wobei 0,8 ≤ X ≤ 1,2, 0,8 ≤ Y ≤ 1,2, und -1 ≤ Z ≤ 1), und/oder ein Oxid, das durch CeₓM_{y}O_{2-z} dargestellt wird (M= mindestens ein Element aus Sc, Y, Zr, In, La, Pr, Sm, Gd und Yb, wobei 0,6 ≤ x ≤ 1,0, 0 ≤ y ≤ 0,4, und 0 ≤ z ≤ 0,5), und
wobei der Gehaltsanteil der Oxide in der porösen Elektrode 30 bis 70 Masse-% beträgt.

3. Feste Oxidzelle, die eine Laminatstruktur aus einem gemischten ionisch-elektronisch leitfähigen Elektrolyt und einer Elektrode nach Anspruch 1 oder Anspruch 2 aufweist.

4. Herstellungsverfahren einer Laminatstruktur aus einem gemischten ionisch-elektronisch leitfähigen Elektrolyt und einer Elektrode nach einem der Ansprüche 1 bis 3, umfassend:
einen Schritt des Bildens der dichten Elektrolytschicht durch Beschichten einer ersten Aufschlämmung auf einem Trägerkörper und dann Anzünden bei einer ersten Temperatur;
einen Schritt des Bildens der porösen Elektrolytschicht durch Beschichten einer zweiten Aufschlämmung auf der dichten Elektrolytschicht und dann Anzünden bei einer zweiten Temperatur; und
einen Schritt des Bildens der porösen Elektrode durch Beschichten einer dritten Aufschlämmung auf der porösen Elektrolytschicht und dann Anzünden bei einer dritten Temperatur.

5. Herstellungsverfahren einer Laminatstruktur aus einem gemischten ionisch-elektronisch leitfähigen Elektrolyt und einer Elektrode nach Anspruch 4,
wobei die erste Temperatur ≥ die zweite Temperatur ≥ die dritte Temperatur.

6. Herstellungsverfahren einer festen Oxidzelle nach Anspruch 3, umfassend:
einen Schritt des Bildens der dichten Elektrolytschicht durch Beschichten einer ersten Aufschlämmung auf einer ersten Elektrode und dann Anzünden bei einer ersten Temperatur;
einen Schritt des Bildens der porösen Elektrolytschicht durch Beschichten einer zweiten Aufschlämmung auf der dichten Elektrolytschicht und dann Anzünden bei einer zweiten Temperatur; und
einen Schritt des Bildens der porösen Elektrode, die eine zweite Elektrode ist, durch Beschichten einer dritten Aufschlämmung auf der porösen Elektrolytschicht und dann Anzünden bei einer dritten Temperatur.

7. Herstellungsverfahren einer festen Oxidzelle nach Anspruch 6, wobei die erste Temperatur ≥ die zweite Temperatur ≥ die dritte Temperatur.

## Revendications

1. Structure stratifiée d'électrolyte conducteur ionique-électronique mixte et d'électrode, comprenant :
une couche d'électrolyte dense qui présente une épaisseur de film de 1 µm à 15 µm et une densité relative de 95 % en volume à 100 % en volume, pouvant être obtenue lorsque mesurée en utilisant un microscope électronique à balayage pour observer les sections transversales des cellules à oxyde solide et en soumettant le contraste des images de microscope électronique à balayage à un traitement d'image, et qui contient un premier oxyde présentant une conductivité ionique-électronique mixte ;
une couche d'électrolyte poreuse qui est stratifiée sur la couche d'électrolyte dense, présente une épaisseur de film de 1 µm à 10 µm et une densité relative de 30 % en volume à 90 % en volume, pouvant être obtenue lorsque mesurée en utilisant un microscope électronique à balayage pour observer les sections transversales des cellules à oxyde solide et en soumettant le contraste des images de microscope électronique à balayage à un traitement d'image, et qui contient un second oxyde présentant une conductivité ionique-électronique mixte ; et
une électrode poreuse qui est stratifiée sur la couche d'électrolyte poreuse,
dans laquelle le premier oxyde et le second oxyde sont des oxydes représentés par A_{X}B_{Y}O_{3+Z} (A = Ba et B = au moins un élément parmi Zr, Ce, Y et Yb, où 0,8 ≤ X ≤ 1,2, 0,8 ≤ Y ≤ 1,2, et -1 ≤ Z ≤ 1).

2. Structure stratifiée d'électrolyte conducteur ionique-électronique mixte et d'électrode telle que revendiquée dans la revendication 1,
dans laquelle l'électrode poreuse contient un oxyde représenté par AₓB_{y}O_{3+z} (A = au moins un élément parmi Sr, Ba et La, et B = au moins un élément parmi Zr, Ce, Sc, Y, In et Yb, où 0,8 ≤ X ≤ 1,2, 0,8 ≤ Y ≤ 1,2 et -1 ≤ Z ≤ 1), et/ou un oxyde représenté par CeₓM_{y}O_{2-z} (M = au moins un élément parmi Sc, Y, Zr, In, La, Pr, Sm, Gd et Yb, où 0,6 ≤ x ≤ 1,0, 0 ≤ y ≤ 0,4, et 0 ≤ z ≤ 0,5), et
dans laquelle le pourcentage de teneur des oxydes dans l'électrode poreuse est 30 % en masse à 70 % en masse.

3. Cellule à oxyde solide présentant une structure stratifiée d'électrolyte conducteur ionique-électronique mixte et d'électrode telle que revendiquée dans la revendication 1 ou la revendication 2.

4. Procédé de fabrication d'une structure stratifiée d'électrolyte conducteur ionique-électronique mixte et d'électrode telle que revendiquée dans l'une quelconque des revendications 1 à 3, comprenant :
une étape de formation de la couche d'électrolyte dense par revêtement d'un corps de support par une première suspension et ensuite cuisson à une première température ;
une étape de formation de la couche d'électrolyte poreuse par revêtement de la couche d'électrolyte dense par une deuxième suspension et ensuite cuisson à une deuxième température ; et
une étape de formation de l'électrode poreuse par revêtement de la couche d'électrolyte poreuse par une troisième suspension et ensuite cuisson à une troisième température.

5. Procédé de fabrication d'une structure stratifiée d'électrolyte conducteur ionique-électronique mixte et d'électrode telle que revendiquée dans la revendication 4,
dans lequel la première température ≥ la deuxième température ≥ la troisième température.

6. Procédé de fabrication d'une cellule à oxyde solide telle que revendiquée dans la revendication 3, comprenant :
une étape de formation de la couche d'électrolyte dense par revêtement d'une première électrode par une première suspension et ensuite cuisson à une première température ;
une étape de formation de la couche d'électrolyte poreuse par revêtement de la couche d'électrolyte dense par une deuxième suspension et ensuite cuisson à une deuxième température ; et
une étape de formation de l'électrode poreuse qui est une seconde électrode par revêtement de la couche d'électrolyte poreuse par une troisième suspension et ensuite cuisson à une troisième température.

7. Procédé de fabrication d'une cellule à oxyde solide telle que revendiquée dans la revendication 6, dans lequel la première température ≥ la deuxième température ≥ la troisième température.
